Europäisches Patentamt

European Patent Office

Office européen des brevets

(19)

(11) Numéro de publication: **0 116 253**
**B1**

(12) # FASCICULE DE BREVET EUROPEEN

(45) Date de publication du fascicule du brevet: **02.09.87**

(51) Int. Cl.⁴: **G 01 M 1/22,** G 01 M 1/08

(21) Numéro de dépôt: **83402557.9**

(22) Date de dépôt: **29.12.83**

(54) **Appareil de mesure de l'amplitude et de la position angulaire d'un balourd d'un système tournant.**

(30) Priorité: **03.01.83 FR 8300004**

(43) Date de publication de la demande:
**22.08.84 Bulletin 84/34**

(45) Mention de la délivrance du brevet:
**02.09.87 Bulletin 87/36**

(84) Etats contractants désignés:
**CH DE FR GB LI**

(56) Documents cités:
**FR-A-2 294 438**
**FR-A-2 434 381**
**US-A-4 134 303**
**US-A-4 135 244**
**US-A-4 238 960**

(73) Titulaire: **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur: **Fillion, Jean-Claude**
**10, rue de Viroflay**
**F-75015 Paris (FR)**

(74) Mandataire: **Moinat, François**
**S.N.E.C.M.A. Service des Brevets Boîte Postale 81**
**F-91003 Evry Cedex (FR)**

Courier Press, Leamington Spa, England.

## Description

La présente invention se rapporte à la mesure de l'amplitude et de la position angulaire d'un balourd d'un système tournant.

Un domaine d'application particulier, mais non limitatif, de l'invetion est celu des appareils de mesure destinés à fournir les indications nécessaires pour équilibrer un réacteur d'avion.

La vérification de l'équilibrage des réacteurs d'un avion est une opération de contrôle couramment effectuée sur piste. A cet effet, les réacteurs d'avion sont pourvus chacun d'un capteur d'accélérations vibratoires sur un palier et d'un capteur de vitesse de rotation et de position. Ces capteurs sont montés à demeure et la détection et la mesure d'un balourd éventuel sont réalisées en branchant un appareil approprié sur les sorties de signal des capteurs. Il est connu par exemple par le UA—A—4 238 960, d'utiliser un appareil fournissant directement une indication sur l'amplitude du balourd et une indication sur la position angulaire de celui-ci. Dans un tel appareil, le signal du capteur d'accélérations vibratoires, après amplification et un premier filtrage, subit deux intégrations successives et est appliqué à un filtre de poursuite à bande passante étroite centrée en permanence sur une fréquence correspondant à la vitesse de rotation mesurée par l'autre capteur. Le signal de sortie du filtre de poursuite est représentatif de l'amplitude d'un balourd éventuel. Le déphasage entre ce signal et celui fourni par le capteur de vitesse de rotation et de · position est déterminé pour fournir une informaiton représentative de la position angulaire du balourd.

En pratique, l'exploitation des informations fournies par ces appareils de mesure connus semble poser divers problèmes.

D'abord, dans certains cas, il est nécessaire que l'opérateur corrige le déphasage mesuré par l'appareil d'un angle représentant un éventuel décalage angulaire entre les positions du capteur de forces vibratoires et du capteur de vitesse de rotation et de position, ce décalage n'étant forcément pas le même sur tous les types de moteur. Or, les contrôles d'équilibrage ne sont généralement pas effectués par un personnel hautement qualifié et sont réalisés dans des conditions trés difficiles (à l'extérieur et dans le bruit), Il s'ensuit fréquemment des erreurs telles que sur le signe de la correction du déphasage mesuré et sur la traduction du déphasage déterminé en une aube particulière sur laquelle une masse doit être par exemple rajoutée. Pour remédier à ces inconvénients on a déja proposé, par exemple par les FR—A—2.294.438, US—A—4.134.303 ou FR—A—2.434.381, de mémoriser dans un circuit les décalages angulaires systématiques dus à l'appareillage de mesure et notamment aux déphasages introduits par les circuits électriques de mesure. De plus il s'est avéré que le déphasage mesuré entre le signal représentatif de l'amplitude du balourd et le signal du capteur de vitesse de rotation et de position, même corrigé du décalage angulaire éventuel entre les positions des capteurs, et du décalage introduit par les déphasages propres aux circuits électroniques de l'appareil de mesure, ne correspond souvent pas à la valeur réelle de la position angulaire du balourd.

En effet, ou a constaté qu'une erreur supplémentaire est introduite par un déphasage "mécanique" fonction des conditions d'essai. Il s'est en effet avéré que des déphasages différents sont mesurés sur un moteur selon qu'il est monté au banc ou sur un avion, toutes choses égales par ailleurs. Il a également été démontré que la vitesse de rotation au cours de l'essai a une influence loin d'être négligeable.

Ces difficultés expliquent qu'en pratique l'équilibrage d'un moteur est souvent fait par tâtonnements et sans nécessairement arriver à un résultat parfait.

Aussi, la présente invention a-t-elle pour but de fournir un appareil de mesure capable de donner directement à l'utilisateur l'information exacte sur la position angulaire d'un balourd d'un système tournant, sans nécessiter des corrections ultérieures sources d'erreurs et de tâtonnements.

Ce but est atteint au moyen d'un appareil comme indiqué dans la revendication 1. Cet appareil comporte: un premier circuit de traitement qui est destiné à recevoir les signaux des capteurs d'accélérations vibratoires et de vitesse de rotation et de position et qui comprend des moyens d'intégration et de filtrage pour fournir un premier signal de sortie représentatif de l'amplitude d'un balourd éventuel du système tournant; et un second circuit de traitement qui est destiné à recevoir le signal du capteur de vitesse de rotation et de position et le premier signal de sortie et qui comprend des moyens de détermination du déphasage entre ces signaux pour fournir un second signal de sortie fonction de la position angulaire dudit balourd, par rapport à une origine déterminée sur ledit système tournant, le second circuit de traitement comprenant une mémoire dans laquelle sont enregistrées des informations représentatives de l'angle entre les positions du capteur d'accélérations vibratoires et du capteur de vitesse de rotation et de position et de l'angle de déphasage introduit par les circuits électroniques du premier circuit de traitement, appareil dans lequel, conformément à l'invention:

—dans la mémoire du second circuit de traitement sont enregistrées en outre, pour différents systémes tournants, des informations représentatives de l'écart angulaire introduit par les conditions d'essais, pour différentes vitesses de rotation et pous différents montages desdits systèmes tournants; des moyens sont prévus destinés à combiner ledit déphasage déterminé avec une information lue dans la mémoire afin de fournir ledit second signal de sortie représentatif de la position angulaire du balourd par rapport à ladite origine déterminée sur le système tournant; et

—des moyens de sélection sont prévus pour, lorsqu'ils sont actionnés, commander de façon sélective la lecture d'informations enregistrées dans la mémoire.

Ainsi, il suffit à l'utilisateur d'agir sur des moyens de sélection, par exemple des touches prévues sur l'appareil, en fonction du système tournant à essayer et/ou de conditions d'essai, pour disposer directement du signal représentatif de la position angulaire exacte du balourd.

Dans le cas de l'application à l'équilibrage de moteurs d'avion, la sélection est effectuée par l'opérateur en fonction du type de moteur et, éventuellement du type d'avion sur lequel le moteur est monté, les informations enregistrées pour un même moteur pouvant être différentes selon que ce moteur est monté sur un avion ou sur un autre. D'autres sélections peuvent être envisagées, par exemple essai au banc ou régime du moteur en cours d'essai.

Les informations enregistrées en mémoire sont déterminées expérimentalement. A cet effet, pour un moeteur parfaitement équilibré et des conditions d'essai donnés, on introduit un balourd dans une position angulaire connue par rapport à une origine donnée et on mesure l'écart entre cette position angulaire et le déphasage calculé entre le signal représentatif de l'amplitude du balourd et le signal du capteur de vitesse de rotation et de position. Plusieurs mesures peuvent être effectuées en changeant la position angulaire du balourd afin de vérifier la constance de l'écart mesuré. Le cas échéant, on retiendra la valeur moyenne des différentes mesures. L'écart ainsi mesuré expérimentalement contient les différentes composantes d'erreur: déphasage entre les positions des capteurs, déphasages électriques des circuits électroniques et déphasage mécanique. En variante, an lieu de déterminer l'écart entre la position angulaire connue du balourd et le déphasage calculé, on détermine l'écart entre la position angulaire de la masse à ajouter pour équilibrage (c'est-à-dire à 180° du balourd) et le déphasage calculé. De la sorte, au cours de l'utilisation ultérieure de l'appareil de mesure, le second signal de sortie représentatif de la position angulaire du balourd donne en fait directement la positin angulaire exacte, par rapport à une origine donnée, du lieu où une masse de compensation doit être placée.

Des séries de mesure sont effectuée pour couvrir les différents cas envisagés d'utilisation de l'appareil de mesure, et les écarts mesurés sont enregistrés dans la mémoire à des adresses différentes.

Selon une particularité de l'appareil de mesure conforme à l'invention, il comprend des moyens d'affichage sous forme d'une graduation circulaire permettant une lecture directe de la position angulaire du balourd et/ou de la masse de compensation à ajouter.

D'autres particularités et avantages de l'appareil de mesure conforme à l'invention ressortiront à la lecture de la description faite, ci-après, à titre indicatif mais non limitatif, en référence aux dessins annexés sur lesquels:

—la figure 1 est une vue très schématique d'un système tournant équipé de capteurs d'accélérations vibratoires et de vitesse de rotation et de position,

—la figure 2 est un schéma des circuits électroniques d'un mode de réalisation d'un appareil de mesure selon l'invention,

—la figure 3 est une vue schématique de la face avant de cet appareil.

Dans la description qui suit, on se place dans le cadre de l'application de l'invention à la mesure de balourd d'un moteur d'avion, ce qui n'exclut bien entendu pas l'application de l'invention à d'autres systèmes tournants.

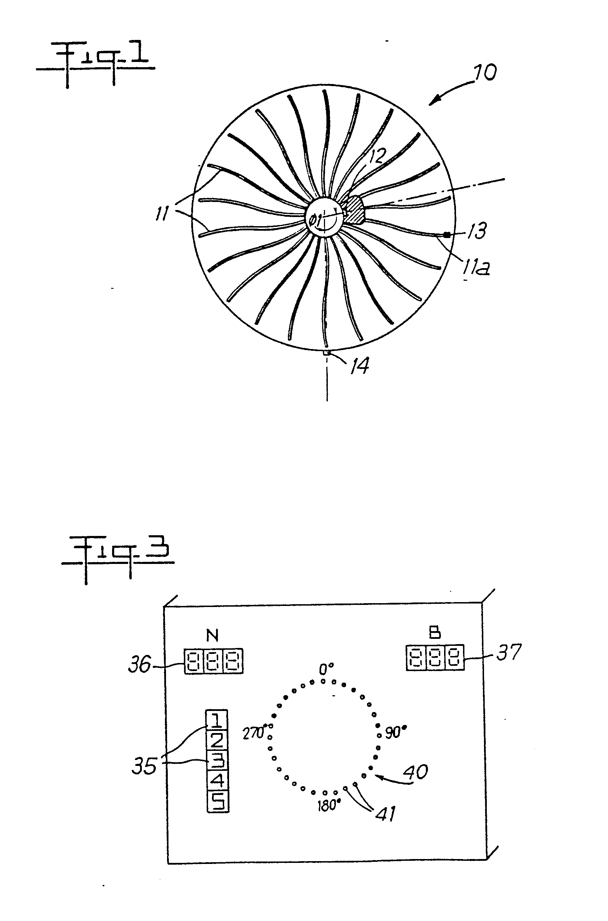

Sur la figure 1 sont représentées schématiquement des aubes 11 d'un moteur 10. Un capteur d'accélérations vibratoires schématisé en 12 est monté sur un des paliers de support de l'arbre du moteur pour fournir un signal dont l'amplitude est représentative des efforts qui lui sont appliqués. Le capteur 12 est par exemple de type piézoélectrique. Un capteur de vitesse de rotation comprenant un tèmoin magnétique 13 monté sur une aube 11a et un détecteur de type magnétique 14 (par exemple une sonde à effet Hall) fournit, en sortie du détecteur un signal représentatif de la vitesse de rotation et de la position de la partie tournante du moteur (une impulsion par tour). Les capteurs 12 et 13—14 sont montés à demeure, au moment de la construction du moteur. L'emplacement du témoin magnétique 13 fournit une origine pour le repérage angulaire du système tournant. Chaque aube 11 présente au moins un trou fileté sur un bord extérieur pour permettre le vissage éventuel de masses de compensation en cas de détection d'un déséquilibre.

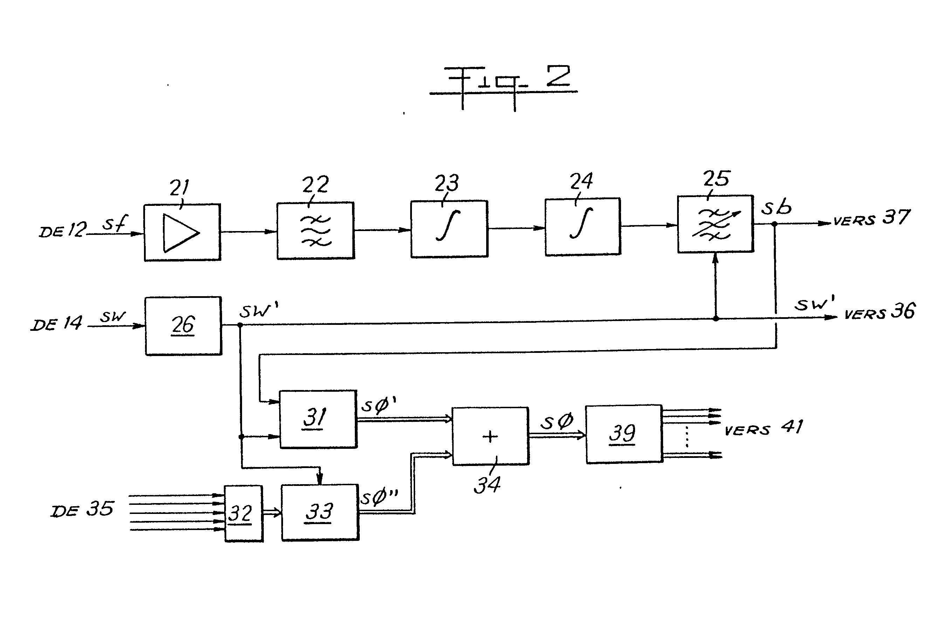

Les signaux sf et sw fournis par les capteurs d'accélération et de vitesse de rotation et de position sont reçus par des circuits de traitement illustrés par la figure 2, afin de détecter et mesurer un balourd éventuel.

Un premier circuit de traitement reçoit les signaux sf et sw afin de fournir un signal sb représentatif de l'amplitude d'un balourd éventuel. A cet effet, ce circuit de traitement comprend, en série netre l'entrée recevant le signal sf et la sortie délivrant le signal sb, un amplificateur 21, un filtre passe-bande 22, un premier intégrateur 23, un second intégrateur 24 et un filtre de poursuite à bande étroite 25. Le filtre passe-bande 22 est destiné à éliminer les composantes du signal sf qui se trouve en dehors du domaine de fréquences correspondant aux plages de vitesses de rotation des moteurs. Les intégrateurs 23 et 24 transforment un signal représentatif d'une accélération en un signal représentatif d'un déplacement. Le filtre 25 est un filtre passe-bande à bande étroite centrée en permanence sur une fréquence correspondant à la vitesse de rotation du moteur. A cet effet, le filtre 25 reçoit un signal sw' représentatif de la fréquence de rotation du moteur, afin de commander la fréquence centrale du filtre passe-bande. Le signal sw' est fourni par un circuit de mise en forme 26 qui reçoit le signal sw et délivre un train d'impulsions rectangulaires ou carrées de fréquence égale à la vitesse de rotation du moteur exprimée en tours/s. Le filtre 25 à fréquence de coupure pilotable peut être conforme à celui décrit dans le FR—A—2 485 946. En sortie du filtre 25, le signal *sb* a une amplitude représentative de déplacements radiaux de l'axe du moteur par rapport au capteur 12, qui se produisent avec une fréquence correspondant à la vitesse de rotation. Le signal *sb* est donc représentatif de l'amplitude du balourd.

Un second circuit de traitement reçoit les signaux *sb* et *sw'* afin de fournir un signal s$\phi$ représentatif de la position angulaire réelle $\phi$ du balourd par rapport au témoin magnétique 13. Un circuit de calcul de déphasage 31 reçoit les signaux *sb* et *sw'* et délivre un signal numérique s$\phi'$ représentatif du déphasage $\phi'$ entre ces signaux. Ce signal s$\phi'$ est appliqué à une entrée d'un additionneur 34 qui reçoit, sur une autre entrée, un signal s$\phi''$ lue dans une mémoire 33 et représentatif de l'écart $\phi''$ entre l'angle $\phi$ et le déphasage $\phi'$. L'additionneur 34 fournit sous forme numérique le signal s$\phi$ recherché. L'information $\phi''$ est lue dans la mémoire à l'adresse indiquée par un circuit d'adresse 32 commandé par des touches de sélection 35 (figure 3).

L'information $\phi''$ a pour composantes: l'angle $\phi1$ éventuel entre les positions du capteur 12 et du détecteur 14 fixé sur le carter du moteur, les déphasages électriques $\phi2$ introduits par les circuits électroniques de premier circuit de traitement et les déphasage mécaniques $\phi3$ fonction du moteur, de l'avion sur lequel le moteur est monté et de la vitesse de rotation. Les informations $\phi''$ ont été préenregistrées dans la mémoire 33 pour les différents moteurs et, éventuellement couples moteur-avion auxquels l'appareil de mesure est destiné. A chacun de ces moteurs ou couples moteur-avion correspond une touche particulière 35 (figure 3) qui, lorsqu'elle est enfoncée par un opérateur, commande la lecture de l'information correspondante dans la mémoire 33. Celle-ci est par exemple une mémoire morte reprogrammable (REPROM). La détermination des informations $\phi''$ est effectuée comme indiqué plus haut à partir de mesures réalisées sur des moteurs équilibrés auxquels un balourd connu est ajouté. L'on a vu que l'une des composantes de $\phi''$ dépend de la vitesse de rotation. Il est donc nécessaire que la mesure du balourd soit effectuée à une vitesse de rotation N (en tours/s) égale ou proche de celle à laquelle la détermination de informations $\phi''$ a eu lieu. A cet effet, le signal *sw'* est appliqué à un circuit d'affichage 36 pour fournir sous forme par exemple numérique une indication représentant la vitesse du moteur contrôlé (ou le pourcentage de cette vitesse par rapport à la vitesse maximale) Il est alors nécessaire, au cours de l'utilisation de l'appareil de mesure, de vérifier que la vitesse affichée N se trouve à l'intérieur d'une plage déterminée.

On a envisagé ci-avant d'associer chaque touche 35 à un type de moteur particulier ou à un couple moteur-avion particulier.

La figure 3 montre schématiquement la face avant de l'appareil de mesure. La vitesse de rotation N s'inscrit numériquement sur le circuit d'affichage 36. Un second circuit d'affichage numérique 37 est destiné à afficher, de façon connue en soi, une information B représentant l'amplitude du balourd ou la valeur de la masse de compensation à ajouter. Cette information est obtenue par conversion sous forme numérique de l'amplitude crête ou moyenne du signal *sb* et application du coefficient multiplicateur convenable. La position angulaire du balourd peut être affichée en degrés sous forme numérique ou analogique (galvanomètre) à partir du signal s$\phi$. Toutefois, selon une particularité avantageuse de l'appareil suivant l'invention, une lecture directe de la position du balourd est possible grâce à l'utilisation d'une graduation circulaire 40 matérialisée par des éléments tels que des diodes électroluminescentes 41. Le signal numérique s$\phi$ est décodé par un circuit 39 (figure 2) qui commande l'allumage de la diode correspondante. La graduation peut être en degrés à partir d'une origine définie par la position du témoin magnétique 13 ou en numéro d'aube compté à partir de l'aube 11*a*.

En variante, la position indiquée par l'allumage d'une diode 41 peut être non pas celle du balourd, mais celle du lieu où une masse de compensation doit être placée. L'utilisateur peut ainsi connaître directement la valeur et la position exactes de la masse de compensation, ce qui élimine pratiquement toute possibilité d'erreurs ou de tâtonnements.

**Revendications**

1. Appareil de mesure de l'amplitude d'un balourd d'un système tournant et d'une grandeur fonction de la position angulaire dudit balourd par rapport à une origine déterminée sur ledit système tournant, à partir de signaux délivrés par un capteur d'accélérations vibratoires et un capteur de vitesse de rotation et de position associés au système tournant, appareil comportant un premier circuit de traitement qui est destiné à recevoir les signaux des capteurs d'accélérations virbatoires et de vitesse de rotation et de position qui comprend des moyens d'intégration et de filtrage pour fournir un premier signal de sortie représentatif de l'amplitude d'un balourd éventuel du système tournant, et un second circuit de traitement qui est destiné à recevoir le signal du capteur de vitesse de rotation et de position et le premier signal de sortie et qui comprend des moyens de détermination du déphasage $\phi'$ entre ces signaux pour fournir un second signal de sortie S$\phi$ fonction de la position angulaire $\phi$ dudit balourd par rapport à une origine déterminée sur ledit système tournant, le second circuit de traitement comprenant une mémoire (33) dans laquelle sont energistrées des informations représentatives, de l'angle $\phi1$ entre les positions du capteur d'accélérations vibratoires et du capteur de vitesse de rotation et de position et de l'angle $\phi2$ de déphasage introduit

par les circuits électroniques du premier circuit de traitement, caractérisé en ce que:

—dans la mémoire (33) du second circuit de traitement sont enregistrées en outre, pour différents systèmes tournants, des informations représentatives de l'écart angulaire $\phi_3$ introduit par les conditions d'essais pour différentes vitesses de rotation et pour différentes montages desdits systèmes tournants:— des moyens (34) sont prévus destinés à combiner ledit déphasage déterminé $\phi'$ avec les informations lues dans la mémoire (33) afin de fournir ledit second signal de sortie S$\phi$ représentatif de la position angulaire du balourd par rapport à ladite origine déterminée sur le système tournant, et

—des moyens de sélection (35) sont prévus pour, lorsqu'ils sont actionnés, commander de façon sélective la lecture d'informations enregistrées dans la mémoire (33).

2. Appareil de mesure selon la revendication 1, caractérisé en ce que les moyens de sélection sont des touches (35) affectées chacune à une conditon d'essai particulière, et reliées à un circuit d'adresses (32) associé à la mémoïre (33).

3. Appareil de mesure selon l'une quelconque des revendications 1 et 2, caractérisé en ce qu'un seocnd signal de sortie modifié correspond à l'angle, par rapport à ladite origine déterminée, de la position où une masse de compensation de balourd doit être placée.

4. Appareil de mesure selon la revendication 3, caractérisé en ce qu'il comprend des moyens d'affichage sous forme d'une graduation circulaire (40) permettant une lecture directe de la position angulaire du balourd et/ou de la masse de compensation à ajouter.

5. Appareil de mesure selon la revendication 4, caractérisé en ce que les moyens d'affichage sont formés par une pluralité d'éléments électroluminescents (41).

**Patentansprüche**

1. Gerät zur Messung der Amplitude der Unwucht eines rotierenden Systems und einer eine Funktion der auf einen an dem rotierenden System festgelegten Ursprung bezogenen Winkelposition der Unwucht darstellenden Größe auf der Grundlage von Signalen eines Vibrationsbeschleunigungssensors und eines Sensors zur Drehgeschwindigkeits- und Positionserfassung, wobei diese Sensoren dem rotierenden System zugeordnet sind,

mit einer zur Aufnahme der Signale des Vibrationsbeschleunigungssensors und des Sensors zur Drehgeschwindigkeits- und Positionserfassung bestimmten ersten Verarbeitungsschaltung, die Integrations- und Filtermittel umfaßt und ein erstes Ausgangssignal liefert, das für die Amplitude einer eventuellen Unwucht des rotierenden Systems kennzeichnend ist,

und mit einer zur Aufnahme des Signals des Sensors zur Drehgeschwindigkeits- und Positionserfassung und des ersten Ausgangssignals bestimmten zweiten Verarbeitungsschaltung, die Mittel zur Feststellung der zwischen diesen Signalen bestehenden Phasenverschiebung $\phi'$ umfaßt und die ein zweites Ausgangssignal S$\phi$ liefert, das eine Funktion der Winkelposition der Unwucht in Bezug auf einen an dem rotierenden System festgelegten Ursprung darstellt,

wobei die zweite Verarbeitungsschaltung einen Speicher (33) umfaßt, in dem Informationen gespeichert sind, die für den Winkel $\phi_1$ zwischen den Positionen des Vibrationsbeschleunigungssensors und des Sensors zur Drehgeschwindigkeits- und Positionserfassung sowie für den von den elektronischen Schlaltkreisen der ersten Verarbeitungsschaltung verursachten Phasenverschiebungswinkel $\phi_2$ kennzeichnend sind, dadurch gekennzeichnet,

daß in dem Speicher (33) der zweiten Verarbeitungsschaltung außerdem Informationen für verschiedene rotierende System gespeichert sind, die den Winkelabstand $\phi_3$ kennzeichnen, der durch die Versuchsbedingungen bei verschiedenen Drehgeschwindigkeiten und verschiedenen Montagearten der rotierenden Systeme bestimmt wird,

daß Mittel (34) vorgesehen sind für die Kombination der festgestellten Phasenverschiebung $\phi'$ mit den aus dem Speicher (33) ausgelesenen Werten und zur Erzeugung des zweiten Ausgangssignals S$\phi$, das die Winkelposition der Unwucht in Bezug auf den an dem rotierenden System festgelegten Ursprung kennzeichnet, und daß Auswahlmittel (35) vorgesehen sind, die in aktiviertem Zustand eine selektive Steuerung des Auslesens der in dem Speicher (33) gespeicherten Informationen ermöglichen.

2. Meßgerät nach Anspruch 1, dadurch gekennzeichnet, daß die Auswahlmittel Tastenschalter (35) sind, die jeweils einer besonderen Versuchsbedingung zugeordnet und mit einer dem Speicher (33) zugeordneten Adressenschaltung (32) verbunden sind.

3. Meßgerät nach einem der Ansprüche 1 und 2, gekennzeichnet durch ein zweites modifiziertes Ausgangssignal, das der auf den an dem System festgelegten Ursprung bezogenen Windkelposition entspricht, an der eine Masse für den Ausgleich der Unwucht plaziert werden muß.

4. Meßgerät nach Anspruch 3, dadurch gekennzeichnet, daß Anzeigemittel in Form einer kreisförmigen Gradskala (40) vorgesehen sind, die ein direktes Ablesen der Winkelposition der Unwucht und/oder der zuzufügenden Ausgleichsmasse ermöglichen.

5. Meßgerät nach Anspruch 4, dadurch gekennzeichnet, daß die Anzeigemittel von mehreren Elektroluminiszenzelementen (41) gebildet sind.

**Claims**

1. Apparatus for measuring the amplitude of an imbalance in a rotating system, and a value which is a function of the angular position of said imbalance with respect to a predetermined origin on said rotating system, from signals provided by a vibratory acceleration sensor and a sensor of rotational speed and of position associated with the rotating system, the apparatus comprising a first processing circuit which is intended to receive the signals from the sensors of vibratory acceleration and of rotational speed and position, which comprises integration means and filtering means for producing a first output signal representative of the amplitude of a possible imbalance of the rotating system, and a second processing circuit which is intended to receive the signal from the rotational speed and position sensor and the first output signal and which comprises means for determining the phase shift $\phi'$ between these signals for producing a second output signal $S\phi$ which is a function of the angular position $\phi$ of said imbalance with respect to a predetermined origin on said rotating system, the second processing circuit comprising a memory (33) in which there are stored data representing the angle $\phi_1$ between the positions of the vibratory acceleration sensor and the sensor of the rotational speed and of position and the angle $\phi_2$ of phase shift introduced by the electronic circuits of the first processing circuit, characterised in that:

—in the memory (33) of the second processing circuit there are also stored, for various rotating systems, data representing the angular variation $\phi_3$ introduced by the test conditions for various rotational speeds and for various mountings of said rotating systems;— means (34) are provided adapted to combine the said determined phase shift $\phi'$ with the data read in the memory (33) in order to provide said second output signal $S\phi$ representative of the angular position of the imbalance with respect to said predetermined origin on the rotating system, and

—selection means (35) are provided for, when they are actuated, controlling in a selective manner the reading of information stored in the memory (33).

2. Measuring apparatus according to claim 1, characterised in that the selection means are keys (35) each relating to a particular test condition, and connected to an address circuit (32) associated with the memory (33).

3. Measuring apparatus according to any one of claims 1 and 2, characterised in that a modified second output signal corresponds to the angle, with respect to said predetermined origin, of the position where an imbalance compensating mass should be located.

4. Measuring apparatus according to claim 3, characterised in that it comprises display means in the form of a graduated circle (40) enabling direct reading of the angular position of an imbalance and/or of the compensating mass to be added.

5. Measuring apparatus according to claim 4, characterised in that the display means are formed by a plurality of electroluminescent elements (41).

**Fig.1**

**Fig.3**

# Fig. 2

| 21 | 22 | 23 | 24 | 25 |

DE 12 _sf_ → ▷ 21 → ≈ 22 → ∫ 23 → ∫ 24 → ≈ 25 _sb_ → VERS 37

DE 14 _sw_ → 26 _sw'_ → VERS 36

31 _sø'_

32 → 33 _sø''_

+ 34 _sø_ → 39 → VERS 41

DE 35 → 32